Europäisches Patentamt

European Patent Office

Office européen des brevets

(11) Numéro de publication: **0 286 477**
**A1**

## (12) DEMANDE DE BREVET EUROPEEN

(21) Numéro de dépôt: **88400615.6**

(22) Date de dépôt: **15.03.88**

(51) Int. Cl.⁴: **B 01 D 23/10**

(30) Priorité: **17.03.87 FR 8703656**

(43) Date de publication de la demande:
**12.10.88 Bulletin 88/41**

(84) Etats contractants désignés:
**AT BE CH DE ES FR GB GR IT LI LU NL SE**

(71) Demandeur: **SOCIETE D'AMENAGEMENT URBAIN ET RURAL SAUR**
**Challenger 1, avenue Eugène Freyssinet**
**F-78064 Saint Quentin en Yvelines Cédex (FR)**

(72) Inventeur: **Hennegrave, Jean-Pierre**
**49, rue de Dantzig**
**F-75015 Paris (FR)**

(74) Mandataire: **Ahner, Francis et al**
**CABINET REGIMBEAU 26, avenue Kléber**
**F-75116 Paris (FR)**

(54) Procédé et installation de régulation de la vitesse de filtration dans un bassin à lit filtrant, notamment pour le traitement des eaux domestiques.

(57) Selon l'invention, on prévoit :

- en aval du bassin (1) de filtration, une vanne commandée (6) à double effet à débit réglable, propre à créer une perte de charge variable sur la conduite de sortie d'eau filtrée du bassin,

- à la surface du plan d'eau du bassin, un capteur (E1) de détection comprenant une électrode sensible à la présence ou à l'absence de liquide à un niveau de consigne prédéterminé, délivrant un signal représentatif du niveau de l'eau dans le bassin, et

- des moyens (8,100) de commande incrémentale de la vanne, fonctionnant en réponse au signal délivré par le capteur, propres à ouvrir la vanne par impulsions successives jusqu'à obtenir le dénoyage de l'électrode initialement noyée, ou à la refermer par impulsions successives jusqu'à obtenir le noyage de l'électrode initialement dénoyée, de manière à faire varier la perte de charge créée par la vanne en aval du bassin dans le sens contraire de la variation de perte de charge du lit filtrant concomitante à une variation du niveau de l'eau dans le bassin.

De la sorte, la vitesse de filtration de l'eau apportée dans le bassin demeure sensiblement constante.

FIG. 1

## Description

# PROCEDE ET INSTALLATION DE REGULATION DE LA VITESSE DE FILTRATION DANS UN BASSIN A LIT FILTRANT, NOTAMMENT POUR LE TRAITEMENT DES EAUX DOMESTIQUES.

La présente invention concerne une installation de régulation de la vitesse de filtration dans un bassin à lit filtrant, notamment pour le traitement des eaux domestiques.

Dans de tels bassins, on observe en effet que la variation du niveau de l'eau et la vitesse de filtration sont deux paramètres étroitement corrélés, de sorte qu'il est nécessaire de surveiller très attentivement le niveau pour éviter que la vitesse de filtration ne s'écarte des valeurs de consigne imposées pour un traitement correct de l'eau.

La variation du niveau peut être la conséquence d'une modification des paramètres physiques du lit filtrant, de sorte que l'augmentation, par exemple au cours du temps, de la perte de charge créée par ce dernier va produire une augmentation régulière du niveau de l'eau dans le bassin, si l'on suppose constant le débit d'alimentaton et de restitution en eau de celui-ci.

Inversement, une augmentation brusque du débit d'alimentation en eau du bassin va produire une montée du niveau dans celui-ci, de sorte que la vitesse de filtration va se trouver affectée par cette montée de niveau. Cette situation se produit fréquemment en particulier dans les unités de filtration à plusieurs bassins, lorsque l'alimentation de l'un des bassins est provisoirement interrompue, par exemple pour lavage du filtre de celui-ci : le débit global se trouve alors réparti sur les autres bassins, ce qui va provoquer dans chacun une augmentation du débit d'alimentation individuel et donc du niveau de l'eau.

Jusqu'à présent, on procédait à une régulation empirique du niveau au moyen de siphons ce qui, dans le cas d'installations à filtres multiples, n'apportait pas de solutions satisfaisantes notamment en raison des différences d'alignement des siphons des filtres, ou pour les filtres à fort débit.

L'invention a pour objet un procédé et une installation permettant précisément de résoudre cette difficulté, par régulation automatique de la vitesse de filtration.

A cet effet, le procédé de l'invention est caractérisé par les étapes consistant à : détecter la présence ou l'absence d'eau à un niveau de consigne prédéterminé de la surface du plan d'eau du bassin ; et commander par incréments la vanne en fonction du résultat de cette détection pour ouvrir la vanne par incréments successifs jusqu'à obtenir le dénoyage de l'électrode initialement noyée, ou refermer celle-ci par incréments successifs jusqu'à obtenir le noyage de l'électrode initialement dénoyée, de manière à faire varier la perte de charge créée par la vanne en aval du bassin dans le sens contraire de la variation de perte de charge du lit filtrant concomitante à une variation du niveau de l'eau dans le bassin.

De la sorte, la vitesse de filtration de l'eau apportée dans le bassin peut demeurer sensiblement constante.

L'invention vise également une installation permettant la mise en oeuvre de ce procédé, qui comprend : en aval du bassin de filtration, une vanne commandée à double effet à débit réglable, propre à créer une perte de charge variable sur la conduite de sortie d'eau filtrée du bassin ; à la surface du plan d'eau du bassin, un capteur de détection comprenant une électrode sensible à la présence ou à l'absence de liquide à un niveau de consigne prédéterminé, délivrant un signal représentatif du niveau de l'eau dans le bassin et des moyens de commande incrémentale de la vanne, fonctionnant en réponse au signal délivré par le capteur, propres à ouvrir la vanne par impulsions successives jusqu'à obtenir le dénoyage de l'électrode initialement noyée, ou à la refermer par impulsions successives jusqu'à obtenir le noyage de l'électrode initialement dénoyée, de manière à faire varier la perte de charge créée par la vanne en aval du bassin dans le sens contraire de la variation de perte de charge du lit filtrant concomitante à une variation du niveau de l'eau dans le bassin,

En d'autres termes, lorsqu'apparaît une variation du niveau de l'eau dans le bassin, et donc de la perte de charge dans le lit filtrant (que cette variation de perte de charge soit la cause ou la conséquence de la variation de niveau), la variation de la perte de charge dans le lit filtrant sera compensée par une variation inverse, de même amplitude, de la perte de charge de la vanne.

En outre, la commande incrémentale permet d'assurer une régulation extrêmement précise (quelques millimètres) autour du niveau de consigne et évite les phénomènes de "pompage" de la boucle de régulation.

Selon d'autres caractéristiques avantageuses de l'invention :
- le capteur est disposé, au voisinage de la surface du plan d'eau du bassin, à l'intérieur d'un tube tranquillisateur ;
- il est en outre prévu un second capteur de détection de présence d'eau à un niveau d'alarme supérieur au niveau de consigne du premier capteur ;
- il est en outre prévu des moyens de lavage automatique du filtre, déclenchés par le second capteur détectant la présence de l'eau au niveau d'alarme et l'ouverture complète de la vanne.

D'autres caractéristiques et avantages de l'invention apparaîtront à la lecture de la description détaillée ci-dessous, faite en référence aux dessins annexés, sur lesquels :
- la figure 1 illustre schématiquement le système de régulation de l'invention installé sur un bassin à lit filtrant,
- la figure 2 détaille le circuit de commande pneumatique de la vanne de régulation,
- la figure 3 est un organigramme détaillant les différentes étapes du processus de régulation.

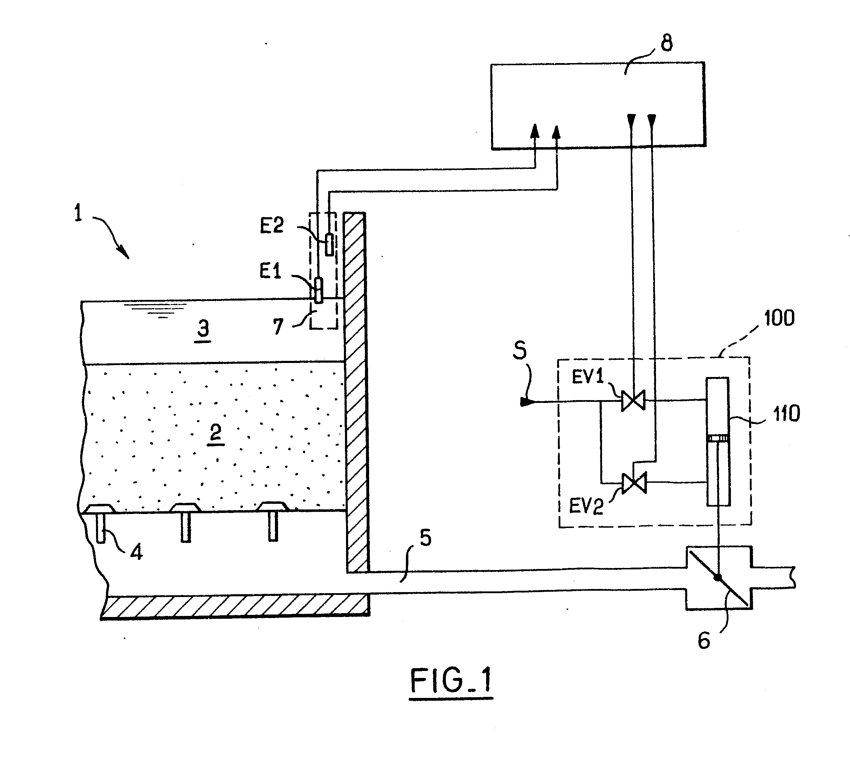

Sur la figure 1, la référence 1 désigne généralement le bassin de traitement de l'eau, comportant un lit filtrant 2 surmonté par une masse d'eau 3 à traiter. Des crépines 4 viennent collecter l'eau en partie basse du lit filtrant, cette eau traitée étant collectée par une conduite 5 pourvue d'une vanne réglable 6, par exemple une vanne à papillon.

Au voisinage de la surface du plan d'eau est disposé un tube tranquillisateur 7 contenant deux électrodes E1, E2 de détection de niveau d'eau ; ces électrodes sont identiques, et constituent chacune un système de détection en "tout ou rien" délivrant un signal électrique à une unité de commande 8.

L'électrode E1 est placée au niveau de consigne que l'on souhaite maintenir dans le bassin et qui correspond à la vitesse optimale de filtration, tandis que l'électrode E2 est placée légèrement au-dessus de ce niveau de consigne (par exemple à 4 cm environ au-dessus de celui-ci) et sert d'électrode d'alarme pour indiquer un dépassement du niveau, par exemple en cas d'engorgement du filtre, ne permettant plus d'assurer la régulation par la vanne 6.

La détection d'une telle alarme, associée à l'ouverture complète de la vanne commandée pourra éventuellement déclencher un processus automatique du lavage du filtre.

L'unité de commande 8 est par exemple constituée par un automate séquentiel tel qu'un TELEMECANIQUE TSX 27-20, qui reçoit les signaux des deux capteurs E1 et E2, et envoie des impulsions de commande aux relais de deux électrovannes EV1 et EV2.

Ces électrovannes font partie d'un circuit pneumatique 100 de commande de la vanne, relié à une source d'air comprimé S et actionnant un vérin à 110 à double effet.

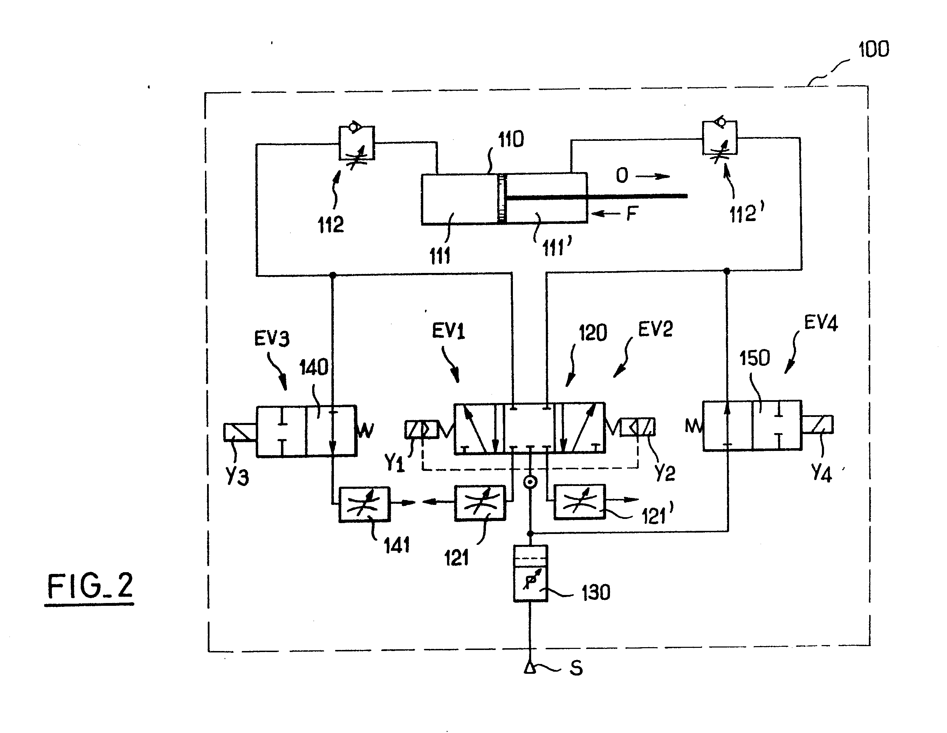

Ce circuit pneumatique, comme on peut le voir plus en détail figure 2, comprend un vérin double effet 110 avec deux chambres 111 (commandant l'ouverture de la vanne) et 111' (commandant la fermeture de la vanne), reliées chacune, par l'intermédiaire de réducteurs de débit respectifs 112 et 112', à un distributeur 120 à trois positions constituant la double électrovanne EV1, EV2.

La chambre 111 est en outre reliée à un distributeur à deux positions 140 (électrovanne EV3), et la chambre 111' à un autre distributeur à deux positions 150 (électrovanne EV4).

Sur la figure 2, les différents distributeurs sont représentés dans la position qu'ils occupent en l'absence de toute alimentation électrique des différents relais de commande Y1, Y2, Y3, Y4.

Dans ce cas, le distributeur 120 est en position centrale, obturant les conduites reliées aux cham-bres 111 et 111'.

En revanche, la chambre 111 est mise en communication par le distributeur 140 avec l'air libre par l'intermédiaire d'un ralentisseur d'échappement 141 ; de la même manière, la chambre 111' (commandant la fermeture de la vanne) est reliée par le distributeur 150 à la source de pression S, avec interposition d'un filtre manodétendeur 130.

Dans cette configuration, le circuit pneumatique provoque la fermeture de la vanne par mise sous pression de la chambre 111' et mise à l'air libre de la chambre 111 dès que l'alimentation électrique de l'installation est interrompue -la vanne devant etre en position fermée lorsque l'installation est au repos.

Dès que la tension est établie, les solénoïdes de commande Y3 et Y4 sont alimentés en permanence, ce qui fait basculer les tiroirs des distributeurs 140 et 150 dans une position découplant les chambres 111 et 111' du régulateur d'échappement 141 et du manodétendeur 130 auquel elles étaient précédemment reliées.

L'alimentation de ces chambres sera alors commandée par le seul distributeur 120, sous l'effet de l'actionnement des solénoïdes Y1 ou Y2.

L'actionnement de Y1 alimentera le vérin dans le sens de l'ouverture de la vanne, en mettant en communication la chambre 111 avec le manodétendeur 130, et la chambre 111' avec le régulateur d'échappement 121 (décalage du tiroir du distributeur 120 vers la droite par rapport à la position illustrée sur la figure).

Inversement, l'actionnement de Y2 alimentera le vérin dans le sens de la fermeture de la vanne, en mettant en communication la chambre 111' avec le manodétendeur 130, et la chambre 111 avec le régulateur d'échappement 121' (décalage du tiroir du distributeur 120 vers la gauche par rapport à la position illustrée sur la figure).

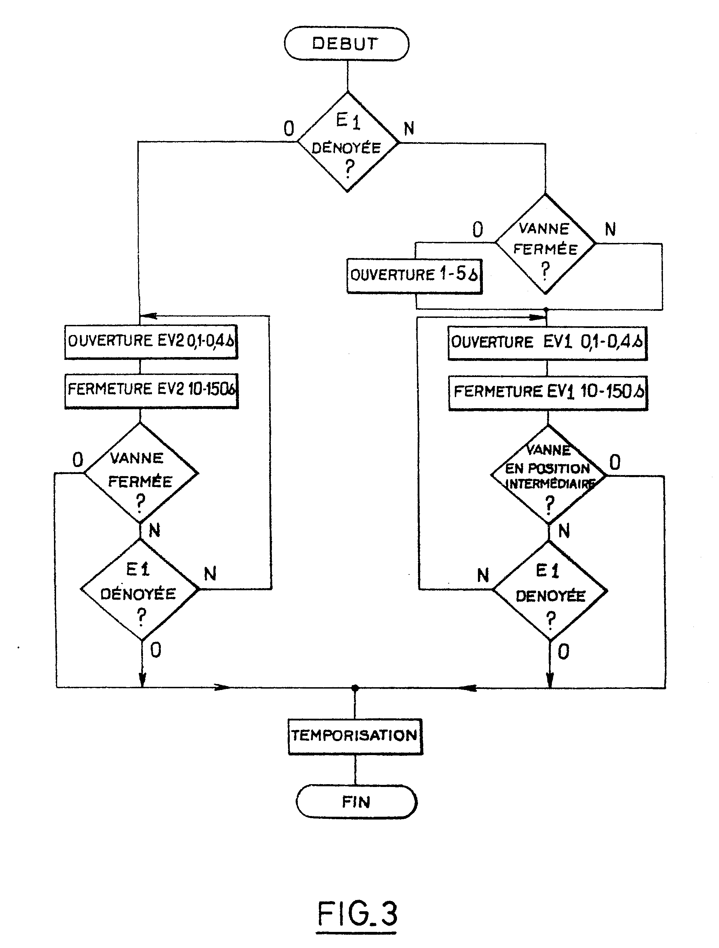

On va maintenant expliciter le fonctionnement de ce système en référence à la figure 3, qui illustre sous forme d'organigramme le fonctionnement du circuit de commande 8.

On teste tout d'abord l'électrode pour savoir si celle-ci est dénoyée.

Dans ce cas, l'électrovanne EV2 (commandant la fermeture de la vanne 6) est ouverte pendant quelques dixièmes de secondes (par exemple 100 à 400 ms), puis refermée ; au bout d'une durée de 10 à 150 s, on teste successivement l'état de la vanne et celui de l'électrode, et l'on répète l'opération (fermeture de la vanne d'un incrément supplémentaire) jusqu'à ce que l'électrode soit noyée, ou jusqu'à arriver à la fermeture complète de la vanne.

Si au contraire, en début de cycle, l'électrode est noyée, on procède à une ouverture progressive de la vanne (partie droite de l'organigramme) de la même manière que précédemment, c'est-à-dire par actionnements successifs de l'électrovanne EV1 (commandant l'ouverture de la vanne 6) suivi d'un test de l'état de la vanne et de l'état de l'électrode, jusqu'à dénoyer cette dernière.

Il est en outre prévu une étape préalable d'initialisation, au cas où la vanne serait complètement fermée : on actionne alors l'électrovanne EV1 pendant une durée assez longue (1 à 5 secondes) de manière à réaliser le décollage du papillon de la vanne, condition nécessaire à l'obtention d'un régime d'écoulement permanent permettant une régulation satisfaisante.

L'algorithme général est ensuite réitéré, après une temporisation suffisante pour éviter les phénomèmes de "pompage" de la boucle de régulation ; la temporisation est choisie de manière à être supérieure à la constante de temps du système hydraulique constitué par le lit filtrant (perte de charge) et le volume d'eau à écouler situé en amont.


## Revendications

1. Un procédé de régulation de la vitesse de filtration dans une installation comprenant un bassin (1) à lit filtrant (2), notamment un bassin de traitement des eaux domestiques, et, en aval du bassin, une vanne commandée (6) à débit réglable propre à créer une perte de charge variable sur la conduite de sortie d'eau filtrée du bassin en fonction du niveau de l'eau mesuré dans ce bassin,

de manière à faire varier la perte de charge créée par la vanne en aval du bassin dans le sens contraire de la variation de perte de charge du lit filtrant concomitante à une variation du niveau de l'eau dans le bassin, et à maintenir ainsi sensiblement constante la vitesse de filtration de l'eau apportée dans le bassin,

procédé caractérisé par les étapes consistant à :

- détecter soit la présence, soit l'absence d'eau à un niveau de consigne prédéterminé de la surface du plan d'eau du bassin, et

- commander par incréments la vanne en fonction du résultat de cette détection pour ouvrir la vanne par incréments successifs jusqu'à obtenir le dénoyage de l'électrode initialement noyée, ou refermer celle-ci par incréments successifs jusqu'à obtenir le noyage de l'électrode initialement dénoyée.

2. Le procédé de la revendication 1, dans lequel il est prévu, après chaque incrément d'ouverture ou de fermeture de la vanne, une temporisation de durée supérieure à la constante de temps du système hydraulique comprenant la perte de charge introduite par le lit filtrant et le volume d'eau à écouler situé en amont.

3. Une installation de régulation de la vitesse de filtration dans un bassin (1) à lit filtrant (2), notamment pour le traitement des eaux domestiques, du type comprenant :

- en aval du bassin de filtration, une vanne commandée (6) à double effet à débit réglable, propre à créer une perte de charge variable sur la conduite de sortie d'eau filtrée du bassin,

- à la surface du plan d'eau du bassin, un capteur de niveau (E1) délivrant un signal représentatif du niveau de l'eau dans le bassin, et

- des moyens (8,100) de commande de la vanne, fonctionnant en réponse au signal délivré par ce capteur de manière à faire varier la perte de charge créée par la vanne en aval du bassin dans le sens contraire de la variation de perte de charge du lit filtrant concomitante à une variation du niveau de l'eau dans le bassin, et à maintenir ainsi sensiblement constante la vitesse de filtration de l'eau apportée dans le bassin,

installation caractérisée en ce que :

- le capteur de niveau est un capteur de détection comprenant une électrode sensible à la présence ou à l'absence de liquide à un niveau de consigne prédéterminé, et

- les moyens de commande de la vanne sont des moyens de commande incrémentale, propres à ouvrir la vanne par impulsions successives jusqu'à obtenir le dénoyage de l'électrode initialement noyée, ou à la refermer par impulsions successives jusqu'à obtenir le noyage de l'électrode initialement dénoyée.

4. Une installation selon la revendication 3, dans laquelle le capteur est disposé, au voisinage de la surface du plan d'eau du bassin, à l'intérieur d'un tube tranquillisateur (7).

5. Une installation selon l'une des revendications 3 et 4, dans laquelle il est en outre prévu un second capteur (E2) de détection de présence d'eau à un niveau d'alarme supérieur au niveau de consigne du premier capteur.

6. Une installation selon la revendication 5, dans laquelle il est en outre prévu des moyens de lavage automatique du filtre, déclenchés par le second capteur détectant la présence de l'eau au niveau d'alarme et l'ouverture complète de la vanne.

## FIG_1

FIG_2

0286477

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 483 915 (DEGREMONT)<br>* Page 1, colonne de gauche, paragraphe 3; page 2, colonne de gauche, paragraphes 1,3-6; colonne de droite, paragraphe 9; page 4, colonne de gauche, paragraphe 2 *<br>--- | 1,3,4 | B 01 D 23/10 |
| A | EP-A-0 150 919 (WATER RESEARCH CENTRE)<br>* Page 2, lignes 28-36; page 3, lignes 1-21; page 4, lignes 8-14 *<br>--- | 1 | |
| A | GB-A- 927 667 (UNION TANK CAR CO.)<br>* Page 2, lignes 69-130 *<br>--- | 4-6 | |
| A | EP-A-0 072 264 (DEGREMONT)<br>* Page 7, lignes 11-33; figure 2 *<br>----- | 1 | |

**DOMAINES TECHNIQUES RECHERCHES (Int. Cl.4)**

B 01 D

Le présent rapport a été établi pour toutes les revendications

| Lieu de la recherche | Date d'achèvement de la recherche | Examinateur |
|---|---|---|
| LA HAYE | 06-06-1988 | KERRES P.M.G. |

EPO FORM 1503 03.82 (P0402)